Europäisches Patentamt

European Patent Office

Office européen des brevets

(11) Numéro de publication: **0 052 062**
**A1**

# DEMANDE DE BREVET EUROPEEN

(21) Numéro de dépôt: **81420168.7**

(22) Date de dépôt: **04.11.81**

(51) Int. Cl.³: **H 01 B 17/22,** H 02 G 7/05

(30) Priorité: **05.11.80 FR 8023945**

(43) Date de publication de la demande: **19.05.82**
**Bulletin 82/20**

(84) Etats contractants désignés: **AT BE CH DE GB IT LI LU NL SE**

(71) Demandeur: **MALICO : Société Anonyme, Zone Industrielle de l'Argentiére 9-11, rue Baptiste Marcet, F-38600 Fontaine (FR)**

(72) Inventeur: **Lienart, Jean-Pierre, F-38410 Saint-Nizier D'Uriage (FR)**

(74) Mandataire: **Maureau, Pierre, Cabinet GERMAIN & MAUREAU Le Britannia - Tour C 20, Boulevard E. Déruelle, F-69003 Lyon (FR)**

(54) **Dispositif pour la fixation d'un câble électrique aérien à un isolateur.**

(57) Ce dispositif permet de fixer un câble électrique (7) à un isolateur (3) porté par un poteau. Il comprend un collier souple (8) de longueur réglable, serrable autour de l'isolateur (3), et une pince (6) serrant le câble (7) entre une gouttière (12) et une bride mobile (10). Le collier est constitué par une câblette (16), associée à des moyens de mise en tension et de blocage (24, 26, 28, 30); cette câblette traverse une partie cylindrique droite (15) appartenant au corps (9) de la pince, et servant de zone d'appui de ce corps dans la gorge de l'isolateur (3). La pince (6) est manœuvrable à distance à l'aide d'une perche isolante, sa bride (10) étant solidaire d'un levier (20) terminé par un œillet (21); cette pince peut être du type à bride (10) reliée de manière articulée au corps (9), au moyen d'un organe élastique (11) réalisant un auto-blocage.

0052062

1

La présente invention concerne un dispositif pour la fixation d'un câble électrique aérien à un isolateur, tel qu'un isolateur porté par un poteau, ce dispositif étant du type comportant un collier souple de longueur réglable serrable autour de l'isolateur, et une pince manoeuvrable à distance, tenue par le collier et apte à serrer le câble à fixer, par pincement entre une gouttière du corps de la pince, d'une part, et une bride mobile, d'autre part.

Les dispositifs de fixation de ce type, connus par exemple par le brevet français N° 2 361 008, ont pour avantages généraux de pouvoir être montés de manière amovible sur tous les isolateurs, le collier étant ajustable, et de permettre une commande à distance de l'ouverture et de la fermeture de la pince, manoeuvrable à l'aide d'une perche isolante, en vue d'effectuer la fixation de câbles sans mise hors tension.

Les réalisations actuelles, conformes au brevet français précité N° 2 361 008, ont cependant encore divers inconvénients liés à leur structure. En particulier, le collier, constitué par un feuillard avec vis de serrage, réalise un lien souple suivant une seule direction, donc assure une tenue trop rigide de la pince sur l'isolateur. De plus, le corps de la pince comporte un bourrelet à profil concave, s'emboîtant dans la gorge de l'isolateur et interdisant de toute façon le basculement de la pince. Ainsi les oscillations du câble serré par la pince ne sont pas absorbées par le dispositif, et la pince transmet à l'isolateur des contraintes excessives. De plus, les dispositifs actuels sont d'une structure relativement complexe, et généralement peu adaptés pour un montage entièrement manuel, en ce qui concerne le collier, et pour une commande à distance aisée, en ce qui concerne la pince.

La présente invention vise à remédier à l'ensemble de ces inconvénients, en fournissant un dispositif perfectionné, possédant une souplesse suffisante pour

2

absorber les oscillations du câble, tout en assurant une fixation suffisamment serrée sur l'isolateur,ce dispositif restant de structure simple et d'utilisation commode.

A cet effet, l'invention a pour objet un dispositif pour la fixation d'un câble électrique aérien à un isolateur, dispositif appartenant au type rappelé en introduction et dans lequel le collier est constitué par un lien souple en toutes directions,tel que câblette, qui est associé à des moyens de mise en tension et blocage,et qui traverse une partie cylindrique droite appartenant au corps de la pince,ladite partie cylindrique droite servant de zone d'appui du corps de la pince dans une gorge de l'isolateur.

Les caractéristiques du collier et de la pince d'un tel dispositif se combinent pour permettre les oscillations du câble,sans risques pour l'isolateur :l'appui de la pince dans la gorge annulaire de l'isolateur par une partie cylindrique droite,occupant une position "tangente ", donne une possibilité de basculement longitudinal et transversal de la pince par rapport à l'isolateur,évitant de transmettre à ce dernier des contraintes inadmissibles,et le basculement de la pince est autorisé par la souplesse en toutes directions du collier, constitué par une câblette associée à des moyens de mise en tension et de blocage.

Ces moyens comprennent, suivant une forme de réalisation de l'invention, un sabot de serrage incurvé en correspondance avec la gorge de l'isolateur,sabot à une extrémité duquel est amarrée une première extrémité de la câblette,tandis que l'autre extrémité dudit sabot est traversée par un fourreau déplaçable axialement et fileté extérieurement, qui porte un écrou constituant une bague de butée contre le sabot, et qui comporte une paroi intérieure tronconique destinée à recevoir un cône fendu,traversé par la seconde extrémité de la câblette, en vue d'assurer le blocage de celle-ci dans le sens de la diminution de sa tension,sans s'opposer à son déplacement dans le sens d'une augmentation de tension. Avantageusement,pour assurer positivement le blocage de la câblette, dans le sens de la diminution dé sa tension, le fourreau précité est en outre fileté intérieurement et reçoit une vis de blocage,traversée par la câblette, et permettant d'enfoncer le cône fendu. De préférence, l'écrou vissé sur le fourreau et la vis de blocage sont tous deux moletés, ce qui permet le montage entièrement manuel du collier autour de l'isolateur.

La partie cylindrique droite du corps de la pince , traversée par la câblette et servant de zone d'appui du corps de la pince dans une gorge de l'isolateur, peut être coiffée d'une coquille en matière plastique, par l'intermédiaire de laquelle s'effectue cet appui.

Parmi les solutions offertes pour le serrage du câble et la manoeuvre à distance du dispositif,on peut retenir plus particulièrement une pince du type à bride de serrage reliée de manière articulée au corps au moyen d'un organe élastique, donnant la pression de serrage du câble et assurant un auto-blocage en position de fermeture, la bride étant solidaire d'un levier terminé par un oeillet pour la manoeuvre à distance de la pince au moyen d'une perche isolante. Dans ce dernier cas, pour qu'à la fermeture de la pince le levier provoque le verrouillage de la bride et non pas le basculement de l'ensemble de la pince, le corps de la pince comporte avantageusement, au-dessus de sa partie cylindrique droite traversée par le câble et servant de zone d'appui sur l'isolateur,un bossage constituant une zone d'appui auxiliaire sur l'isolateur.

De toute façon, l'invention sera bien comprise à l'aide de la description qui suit, en référence au dessin schématique annexé représentant, à titre d'exemple non limitatif, une forme d'exécution de ce dispositif pour la fixation d'un câble électrique à un isolateur :

Figure 1 montre, à petite échelle, un poteau électrique équipé de plusieurs dispositifs conformes à l'invention;

Figure 2 est une vue d'ensemble, en plan par dessus, d'un dispositif conforme à l'invention, serrant un câble et monté autour d'un isolateur;

Figure 3 est une vue de côté,avec coupe partielle, de la pince en position de serrage du câble;

Figure 4 en est une vue en coupe,suivant 4-4 de figure 3;

Figure 5 est une vue similaire à figure 3, mais en position d'ouverture de la pince;

Figure 6 est une vue en coupe suivant 6-6 de figure 2, et à échelle agrandie, montrant le détail des moyens de mise en tension et de blocage de la câblette;

Figure 7 est une vue en coupe suivant 7-7 de figure 6.

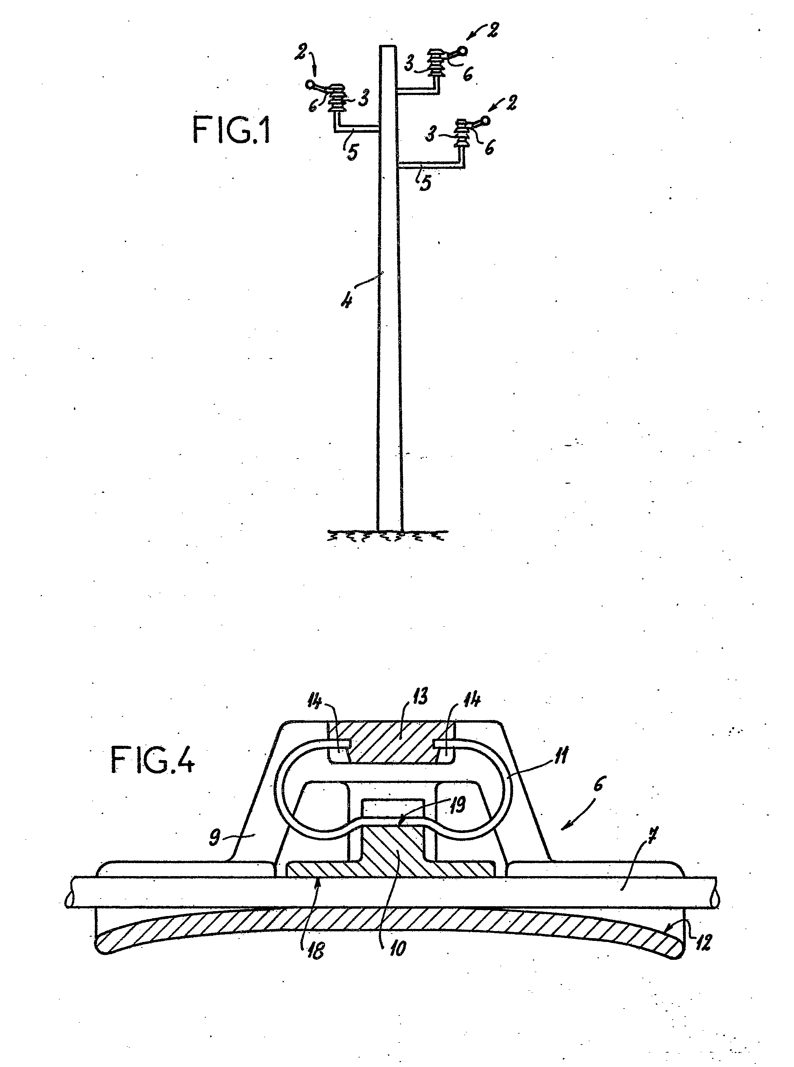

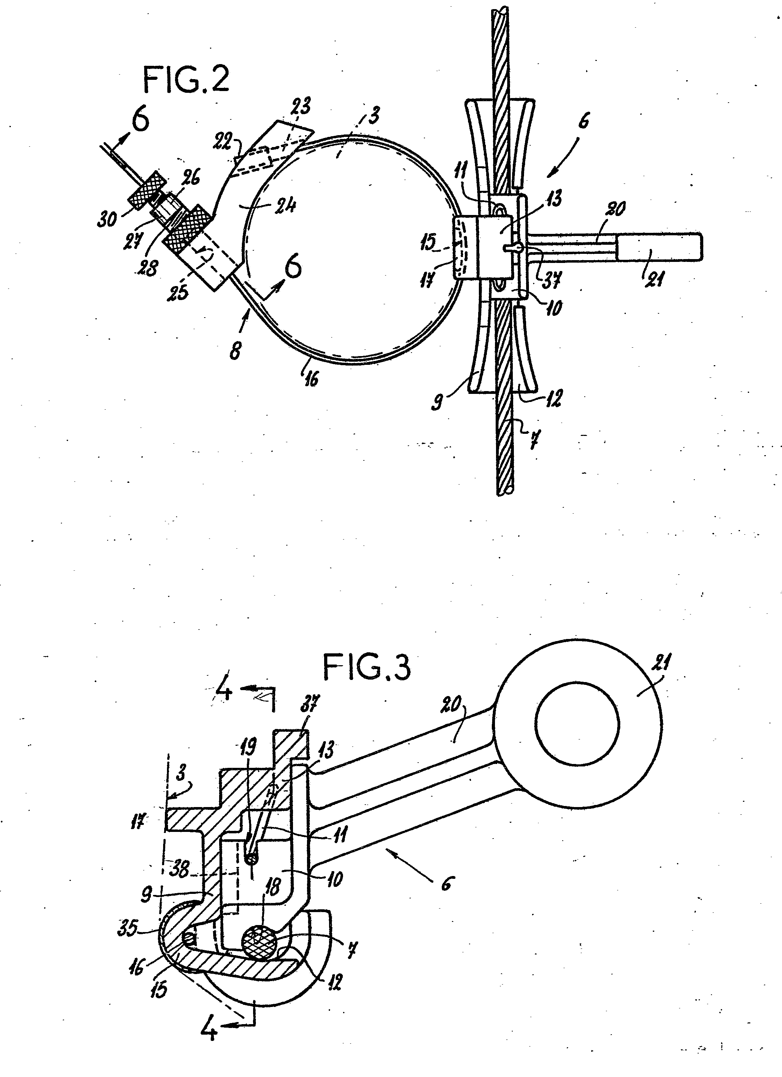

Comme le montre la figure 1, le dispositif 2 objet de l'invention se fixe à un isolateur 3, lui-même supporté par un poteau électrique 4 par l'intermédiaire d'une console 5. Ce dispositif se compose principalement d'une pince 6 serrant un câble électrique aérien 7, et d'un collier 8 entourant l'isolateur 3,cette structure générale apparaissant sur la figure 2.

La pince 6 comprend un corps 9 et une bride de serrage 10, réunis au moyen d'un organe élastique 11.

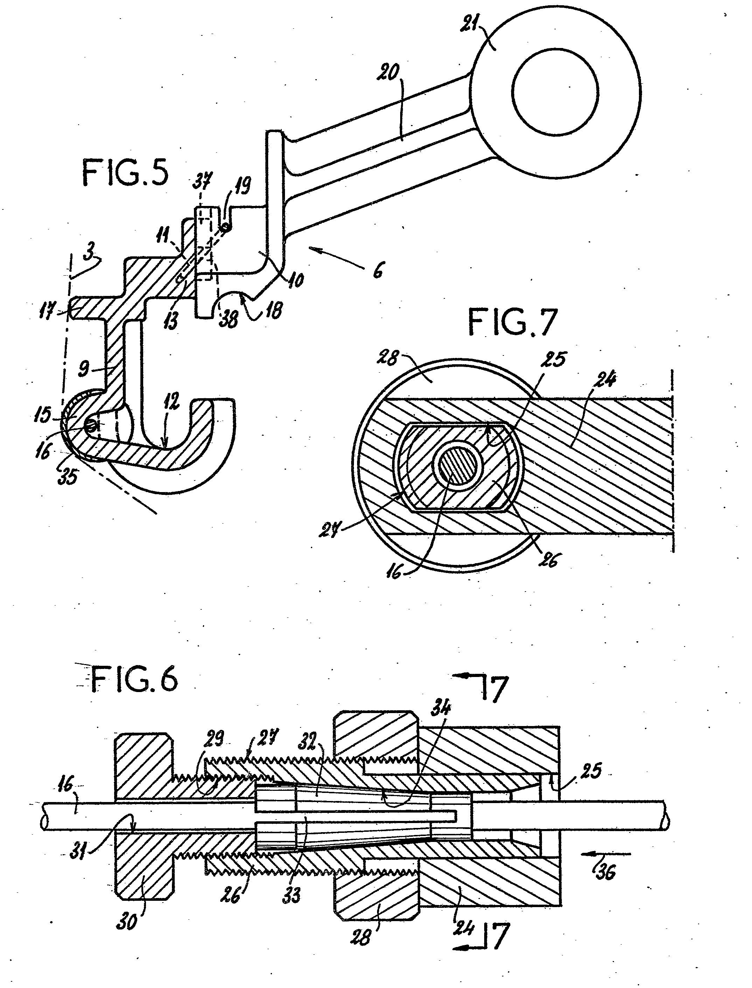

Le corps 9 de la pince comporte,à sa partie inférieure,une gouttière allongée 12 destinée à recevoir le câble électrique 7. Sa partie supérieure constitue une tête 13 en saillie, située au-dessus de la gouttière 12 et recevant, dans deux encoches opposées 14,les deux extrémités de l'organe élastique 11, lequel possède une forme générale en " C" comme le montre la figure 4.

Sur l'arrière du corps 9, à hauteur de la gouttière 12, est formée une partie cylindrique droite 15 d'axe sensiblement horizontal, cette partie cylindrique étant traversée par la câblette 16 constituant l'élément principal du collier 8. Un bossage 17 est en outre prévu sur la face arrière du corps 9, au-dessus de ladite partie cylindrique 15.

La bride de serrage 10 possède, à sa partie inférieure, une gorge 18 dont le profil est complémentaire de celui du câble 7, tandis que sa partie supérieure comporte une encoche longitudinale 19 traversée par l'organe élastique 11. La bride 10 est encore solidaire d'un levier 20, se terminant par un oeillet 21 qui permet la manoeuvre à distance au moyen d'une perche isolante.

La câblette 16, qui traverse la partie cylindrique 15 du corps 9 de la pince 6, se termine à une de ses extrémités par un embout 22, cette extrémité étant enfilée dans un perçage étagé 23 d'un sabot de serrage incurvé 24, de telle manière que l'embout 22 assure l'amarrage de la câblette 16.

Dans sa partie éloignée du perçage 23, le sabot 24 comporte (voir figure 6) un autre trou 25, traversé par un fourreau 26 avec un filetage extérieur 27. La partie du fourreau 26 introduite dans ce trou 25 possède, comme le montre clairement la figure 7, deux méplats qui lui permettent de coulisser sans tourner dans le sabot 24, le trou 25 possédant une section correspondante. Les secteurs cylindriques, situés de part et d'autre des deux méplats du fourreau 26, sont filetés et réalisent le prolongement du filetage 27. Un écrou moleté 28, constituant bague de butée contre une face du sabot 24, est vissé sur le filetage 27 du fourreau 26, y compris sur le prolongement de ce filetage, entre les méplats du fourreau. Ce fourreau 26 présente aussi, sur une partie de sa longueur, un filetage intérieur 29, recevant une vis de blocage moletée 30, avec un perçage 31 suivant son axe.

La seconde extrémité de la câblette 16 traverse le trou 25 du sabot 24, le fourreau 26 et le perçage 31 de la vis 30. Sur la partie de la câblette 16 située à l'intérieur du fourreau 26 est enfilé un cône 32 comportant des fentes longitudinales 33. La surface extérieure du cône fendu 32 est en appui contre une paroi intérieure tronconique complémentaire 34 du fourreau 26.

Dans la position d'utilisation du dispositif, le corps 9 de la pince 6 est appliqué contre une gorge de l'isolateur 3 par sa partie cylindrique 15, et la câblette 16 est aussi mise en place dans cette gorge, en même temps que le sabot 24 dont le bord interne incurvé est complémentaire de ladite gorge. De préférence, comme le montrent les figures 3 et 5, le corps 9 de la pince prend appui au fond de la gorge de l'isolateur 3 par l'intermédiaire d'une coquille 35 en matière plastique, qui coiffe la partie cylindrique 15 traversée par la câblette 16.

Le cône fendu 32 permet le glissement de la câblette 16 dans le sens de la flèche 36 (figure 6), correspondant à l'augmentation de la tension de la câblette 16, mais il s'oppose au déplacement de cette câblette dans le sens de la diminution de sa tension. La vis moletée 30 permet d'enfoncer le cône 32 dans le fourreau 26, pour assurer le blocage positif de la câblette 16 dans le sens de sa diminution de tension. L'écrou moleté 28 permet un ajustement de cette tension, sans déblocage de la câblette 16 : son vissage sur le filetage extérieur 27 du fourreau 26 déplace simultanément le fourreau 26, le cône fendu 32 et la vis de blocage 30, donc la seconde extrémité de la câblette 16 par rapport au sabot 24.

Le serrage du câble 7 est assuré par la pince 6, lorsque celle-ci est en position fermée comme le montrent les figures 3 et 4. Le câble 7 est alors pressé entre la gouttière 12 du corps 9, d'une part, et la gorge 18 de la bride de serrage 10, d'autre part. L'organe élastique 11 est comprimé et occupe une position située dans un plan oblique, de sorte qu'il pousse la bride 10 à la fois vers le bas, pour serrer le câble 7, et contre le corps 9, ce qui assure un auto-blocage de l'ensemble.

Pour desserrer le câble 7, on fait basculer le levier 20, en le manoeuvrant à distance au moyen d'une perche isolante comme déjà indiqué. Après passage d'un "point dur ", l'organe élastique 11 permet d'écarter librement la bride 10 du corps 9,cet organe élastique 11 réalisant une double articulation. Comme illustré par la figure 5, la pince 6 peut être maintenue verrouillée en position ouverte, la bride 10 venant s'appliquer contre la tête supérieure 13 du corps 9.Dans cette position d'ouverture complète ,un téton 37 prévu sur la tête 13 du corps 9 est enclenché dans un évidement correspondant 38 de la bride 10,pour maintenir la pince en position ouverte. Ce verrouillage de la pince en position ouverte est réalisé manuellement "au contact ", et non pas à distance, à l'aide d'une perche isolante.

Pour refermer la pince 6,le câble 7 ayant été mis en place dans la gouttière 12 à distance, à l'aide de perches, l'oeillet 21 du levier 20 est saisi à l'aide d'une perche et tiré vers le bas. Le téton 37 échappe à l'évidement 38 et la bride 10 tombe à l'aplomb du câble 7, retenue par l'organe élastique de liaison et d'articulation 11. Le levier 20, entraîné par son poids, vient alors en position basse. Pour verrouiller la pince 6, il suffit de le relever.La bride 10, guidée par l'organe 11, pivote sur le câble 7 autour de sa gorge 18.Le fait de relever le levier 20 comprime l'organe élastique 11. Le verrouillage est obtenu lorsque la bride 10 est arrivée en butée contre le corps 9 de la pince 6. Le mouvement de basculement est tel qu'après passage d'un " point dur ", l'organe élastique 11 comprimé repousse la bride 10 contre le câble et maintient cette bride plaquée contre le corps 9, ce qui assure l'auto-blocage du système de serrage comme déjà indiqué plus haut.

Il est à noter encore qu'au moment où le levier 20 est actionné vers le haut pour verrouiller la pince 6, ce qui tend à la faire basculer contre l'isolateur 3, le bossage 17 intervient, en s'appliquant contre l'isolateur 3, pour éviter ou du moins limiter très fortement la basculement du corps 9, et obliger la bride 10 à pivoter seule.

Comme il va de soi, l'invention ne se limite pas à la seule forme d'exécution de ce dispositif pour la fixation d'un câble électrique à un isolateur qui a été décrite ci-dessus, à titre d'exemple non limitatif;elle en embrasse, au contraire,toutes les variantes de réalisation et d'application comportant des moyens équivalents.

## -REVENDICATIONS-

1.- Dispositif pour la fixation d'un câble électrique aérien à un isolateur, du type comportant un collier souple (8) de longueur réglable serrable autour de l'isolateur (3), et une pince manoeuvrable à distance (6), tenue par le collier (8) et apte à serrer le câble (7) à fixer,par pincement entre une gouttière (12) du corps (9) de la pince,d'une part, et une bride mobile (10), d'autre part, caractérisé en ce que le collier (8) est constitué par un lien souple en toutes directions, tel que câblette (16), qui est associé à des moyens de mise en tension et blocage (24 à 34), et qui traverse une partie cylindrique droite (15)appartenant au corps (9) de la pince (6), ladite partie cylindrique droite (15) servant de zone d'appui du corps (9) de la pince (6) dans une gorge de l'isolateur (3).

2.- Dispositif selon la revendication 1,caractérisé en ce que les moyens de mise en tension et de blocage de la câblette (16) comprennent un sabot de serrage (24), incurvé en correspondance avec la gorge de l'isolateur (3), sabot à une extrémité duquel est amarrée une première extrémité de la câblette (16),tandis que l'autre extrémité dudit sabot (24) est traversée par un fourreau (26) déplaçable axialement et fileté extérieurement, qui porte un écrou (28) constituant une bague de butée contre le sabot (24), et qui comporte une paroi intérieure tronconique (34) destinée à recevoir un cône fendu (32),traversé par la seconde extrémité de la câblette (16), en vue d'assurer le blocage de celle-ci dans le sens de la diminution de sa tension, sans s'opposer à son déplacement dans le sens d'une augmentation de tension.

3.- Dispositif selon la revendication 2,caractérisé en ce que le fourreau précité (26) est en outre fileté intérieurement et reçoit une vis de blocage (30),traversée par la câblette (16),et permettant d'enfoncer le cône fendu (32).

10

4.- Dispositif selon l'ensemble des revendications 2 et 3,caractérisé en ce que l'écrou (28) vissé sur le fourreau (26) et la vis de blocage (30) sont moletés.

5.-Dispositif selon l'une quelconque des revendications 1 à 4,caractérisé en ce que la partie cylindrique droite (15) du corps (9) de la pince (6),traversée par la câblette (16) et servant de zone d'appui du corps (9) de la pince (6) dans une gorge de l'isolateur (3), est coiffée d'une coquille (35) en matière plastique, par l'intermédiaire de laquelle s'effectue cet appui.

6.-Dispositif selon l'une quelconque des revendications 1 à 5, caractérisé en ce que la pince (6) est du type à bride de serrage (10) reliée de manière articulée au corps (9) au moyen d'un organe élastique (11), donnant la pression de serrage du câble (7) et assurant un auto-blocage en position de fermeture,la bride (10) étant solidaire d'un levier (20) terminé par un oeillet (21) pour la manoeuvre à distance de la pince(6) au moyen d'une perche isolante.

7.- Dispositif selon la revendication 6,caractérisé en ce que le corps (9) de la pince (6) comporte,au-dessus de sa partie cylindrique droite (15) traversée par le câble (7) et servant de zone d'appui sur l'isolateur (3),un bossage (17) constituant une zone d'appui auxiliaire sur l'isolateur (3).

8.- Dispositif selon la revendication 6 ou 7,caractérisé en ce que le corps (9) et la bride (10) de la pince (6),reliés de manière articulée au moyen de l'organe élastique précité (11), comportent,l'un, un téton (37), et l'autre, un évidement correspondant (38), le téton (37) venant s'enclencher dans l'évidement (38) en position d'ouverture complète de la pince(6).

0052062

FIG.1

FIG.4

FIG.2

FIG.3

0052062

## FIG.5

## FIG.7

## FIG.6

**Office européen des brevets**

**RAPPORT DE RECHERCHE EUROPEENNE**

EP 81 42 0168

| | DOCUMENTS CONSIDERES COMME PERTINENTS | | CLASSEMENT DE LA DEMANDE (Int. Cl. 3) |
|---|---|---|---|
| Catégorie | Citation du document avec indication, en cas de besoin, des parties pertinentes | Revendica-tion concernée | |
| Y | <u>GB - A - 187 547</u> (TWISS)<br><br>* Page 1, lignes 9-43,56-73; page 2, lignes 1-25; figures 2,4 *<br><br>-- | 1 | H 01 B 17/22<br>H 02 G 7/05 |
| YD | <u>FR - A - 2 361 008</u> (LIENART)<br><br>* Page 5, lignes 1-5; figure 2 *<br><br>-- | 1 | |
| A | <u>FR - A - 1 292 395</u> (ELECTRICITE DE FRANCE)<br><br>* Page 1, colonne de gauche, alinéas 1-5 *<br><br>-- | 1 | |
| A | <u>FR - A - 2 379 923</u> (DERVAUX)<br><br>* Page 1, ligne 35 - page 2, ligne 8; figure 3 *<br><br>-- | 1,5 | |
| A | <u>DE - C - 644 345</u> (HOFMANN)<br><br>* Page 2, lignes 37-50;103-122; page 3, lignes 1-29; figures 4, 7,8 *<br><br>-- | 2,3 | |
| A | <u>FR - A - 2 342 569</u> (DERVAUX)<br><br>* Page 1, lignes 21-35; page 4, lignes 3-36; figures 1,2 *<br><br>---- | 6 | |

**DOMAINES TECHNIQUES RECHERCHES (Int. Cl. 3)**

H 01 B 17/00
H 02 G 7/00
H 02 G 1/00

**CATEGORIE DES DOCUMENTS CITES**

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons

&: membre de la même famille, document correspondant

X Le présent rapport de recherche a été établi pour toutes les revendications

| Lieu de la recherche | Date d'achèvement de la recherche | Examinateur |
|---|---|---|
| La Haye | 25-02-1982 | TIELEMANS |